# EUROPÄISCHE PATENTANMELDUNG

(11) **EP 1 698 390 A1**
(43) Veröffentlichungstag der Anmeldung: **06.09.2006**
(21) Anmeldenummer: 06003762.9
(22) Anmeldetag: 24.02.2006
(51) Int. Cl.: B01D 46/42, B01D 47/02

(54) **Vorrichtung zum Abscheiden von Feststoffen aus einem gasförmigen Medium**

(30) Priorität: 28.02.2005 DE 202005003368 U
(71) Anmelder: Handte Umwelttechnik GmbH, 78532 Tuttlingen (DE)
(72) Erfinder: Handte, Siegfried, Dipl. -Ing., 78351 Bodman-Ludwigshafen (DE)
(74) Vertreter: Müller, Hans

(57) **Zusammenfassung**

Eine Vorrichtung (10) zum Abscheiden von Feststoffen aus einem gasförmigen Medium (38) besitzt eine Einrichtung zum Befeuchten ihrer Filterelemente (14) und/oder des an den Filterelementen (14) anhaftenden Filterkuchens mit einer nicht brennbaren Flüssigkeit sowie einen unterhalb der Filterelemente (14) vorhandenen zumindest teilweise mit Wasser (36) gefüllten Auffangbehälter (34) für abgeschiedene Feststoffe. Ein Ventilator (40) zum drückenden Einleiten des zu reinigenden Mediums (38) durch die Rohgasleitung (42) hindurch und in die Abscheide-Vorrichtung (10) hinein ist vorhanden. Die Rohgasleitung (42) endet so oberhalb des Wasserspiegels (46) des im Auffangbehälter (34) vorhandenen Wassers (36), dass eine starke Verwirbelung des Wassers mit aus der Rohgasleitung herausströmendem Medium herstellbar ist.

## Beschreibung

### TECHNISCHES GEBIET

Die Erfindung betrifft eine Vorrichtung, mit der sich bei Verwendung von Trockenfiltern Feststoffe, die auch aus brennbaren Stäuben bestehen können, aus einem gasförmigen Medium abscheiden lassen. Solche Feststoffe sind beispielsweise metallische Stäube, wie sie insbesondere bei Laser-Schneid- und Schweißmaschinen anfallen können. Bei dem Betrieb solcher Trockenfilter ist daher die Brandgefahr sehr groß, und zwar auch dann, wenn es sich nicht um ausgesprochen explosive Stäube handelt. So ist auch bei Eisenstäuben regelmäßig eine Brandgefahr vorhanden, insbesondere dann, wenn zusammen mit solchen Stäuben beispielsweise die auf Laser-Schneide- und Schweißmaschinen verwendeten Öle in dem Rohgasstrom mitgerissen werden. Durch die Vermischung solcher Öltröpfchen mit den metallischen Stäuben bildet sich auf den Filterelementen ein Filterkuchen, der sich sowohl selbst als auch durch die in der Rohgasleitung mitgeführten Funken entzünden kann.

### STAND DER TECHNIK

Aus der DE 201 10 152 U1 ist eine Vorrichtung zum Abscheiden von Feststoffen aus einem gasförmigen Medium bekannt, das brennbaren Staub enthalten kann. Durch die Zugabe von inerten Stoffen, die beispielsweise Kalkmehl enthalten, wird das Entstehen von explosionsfähigen Staub-Luft-Gemischen innerhalb der Abscheidevorrichtung verhindert. Die inerten Stoffe sind in einem oben offenen Staubbehälter vorhanden, der unterhalb der Filterelemente positioniert wird. Aus diesem Staubbehälter werden einerseits die inerten Stoffe nach oben gegen die Filterelemente geblasen, andererseits sammeln sich in diesem Staubbehälter die bei der Abreinigung der Filterelemente von denselben abfallenden Prozess-Stäube. Durch die Vermischung der inerten Stoffe mit dem auf der Filteroberfläche sich absetzenden Filterkuchen wird die Gefahr eines Filterbrandes stark reduziert. Bei diesem Abscheideverfahren stellt die Verwendung der inerten Stoffe einen wirtschaftlich nicht unbedeutenden Materialaufwand dar. Um diesen Materialaufwand so gering wie möglich zu halten, ist eine aufwändige Dosiersteuerung erforderlich.

Bei der aus der DE 20 2004 001 963 U1 bekannten weiteren Vorrichtung zum Abscheiden von Feststoffen aus einem gasförmigen Medium wird auf die Verwendung von Additiven verzichtet und statt dessen Wasser dem mit brennbarem Staub beladenen Rohgas zugegeben. Dieses Wasser wird über eine mit Luftdruck betriebene Zweistoffdüse in die Rohgasleitung eingesprüht. Der Grad der Benetzung der in dem Rohgas vorhandenen Staubpartikel mit Wassertröpfchen hängt von den herrschenden Druckverhältnissen ab. Trotz einer aufwändigen Steuereinrichtung zum Ansteuern der Zweistoffdüse und damit zum Regulieren der aus der Düse austretenden Wassermenge gelingt die vollständige Benetzung der Rohgaspartikel nicht bei allen Betriebszuständen völlig zufriedenstellend. Von Nachteil sind auch die im Bereich der Filterelemente herrschenden ungünstigen Anströmverhältnisse durch den seitlich auf die Filterelemente auftreffenden Rohgasstrom. Damit die Zweistoffdüse die Filterelemente im Falle eines im Inneren des Filtergehäuses entstandenen Brandes schnell und wirkungsvoll mit Wasser beaufschlagen und die Zweistoffdüse auch als Brandschutzeinrichtung zum Bekämpfen eines solchen Brandes verwendet und auf zusätzliche Wasser-Sprüheinrichtungen verzichtet werden kann, können die im Stand der Technik bekannten Leit- und Prallbleche, mit denen der aus der Rohgasleitung in das Filtergehäuse hineinströmende Rohgasstrom so verteilt wird, dass er möglichst gleichmäßig auf die Filterelemente auftrifft, nicht verwendet werden.

### DARSTELLUNG DER ERFINDUNG

Ausgehend von diesem Stand der Technik liegt der Erfindung die Aufgabe zugrunde, eine verbesserte Abscheidevorrichtung der eingangs genannten Art anzugeben.

Diese Erfindung ist durch die Merkmale des Anspruchs 1 gegeben. Sinnvolle Weiterbildungen der Erfindung sind Gegenstand von sich daran anschließenden weiteren Ansprüchen.

Die erfindungsgemäße Vorrichtung verwendet einen unterhalb der Filterelemente vorhandenen Auffangbehälter für den beim Abreinigen der Filterelemente nach unten von den Filterelementen abfallenden Prozess-Staub. Der Auffangbehälter ist aber nicht mit den im Stand der Technik bekannten inerten Stoffen, sondern mit Wasser gefüllt. Gegen die Wasseroberfläche in diesem Auffangbehälter wird das Rohgas mit Druck geblasen. Dabei findet eine starke Verwirbelung von Luft und Wasser statt, bei der der im Rohgas vorhandene Staub stark angefeuchtet wird. Die in dem Rohgas vorhandenen Funken werden dadurch gelöscht. Die in der Verwirbelungsströmung vorhandenen ausreichend schweren Teile fallen unmittelbar nach unten in das Wasserbad hinein. Die Wirbelströmung mit den restlichen Bestandteilen strömt nach oben in Richtung der Filterelemente. Als Folge davon werden die Filterelemente mit dem Rohgas beaufschlagt und dabei gleichzeitig so stark mit Wasser benetzt, dass die Zündtemperatur im Bereich der Filterelemente so weit angehoben wird, dass keine Entzündung mehr der in dem Rohgas eventuell vorhandenen Funken eintreten kann. Beim Abreinigen der Filterelemente fallen die dort anhaftenden Filterkuchen nach unten in den Wasserbehälter hinein. Nach einer bestimmten Zeit, wenn sich das Wasser mit Staub gesättigt hat, wird der Inhalt des Auffangbehälters entleert und mit frischem Wasser gefüllt.

Der Auffangbehälter kann fest oder lösbar an dem Filtergehäuse befestigt sein.

In dem Filtergehäuse können Umlenkeinrichtungen, wie beispielsweise ein in der Zeichnung dargestelltes Rohrstück, das in das Wasser teilweise eintaucht, angeordnet werden, zwecks Optimierung einerseits der Verwirbelung und Vermischung des aus der Rohgasleitung gegen die Wasseroberfläche geblasenen Rohgasstromes, andererseits zur optimalen Umlenkung der bei der Verwirbelung entstehenden Strömung nach oben gegen die Filterelemente. Dieses beispielsweise in das Wasser eintauchende Rohrstück kann zylindrisch oder nach oben, beziehungsweise nach unten konisch ausgebildet sein.

Der Wasserstand in dem Vorratsbehälter kann über eine Wasserstandsreglierungs-Einrichtung konstant gehalten werden. Das Zugeben von Frischwasser in den Vorratsbehälter hinein kann über ein mehrere Austrittsdüsen enthaltendes Düsensystem erfolgen. Die Austrittsdüsen münden dabei so in das Filtergehäuse hinein, dass durch sie die Filterelemente auch mit Frischwasser benetzt werden können.

Weitere Vorteile und Merkmale der Erfindung sind den in den Ansprüchen ferner aufgeführten Merkmalen sowie dem nachstehenden Ausführungsbeispiel zu entnehmen.

### KURZE BESCHREIBUNG DER ZEICHNUNG

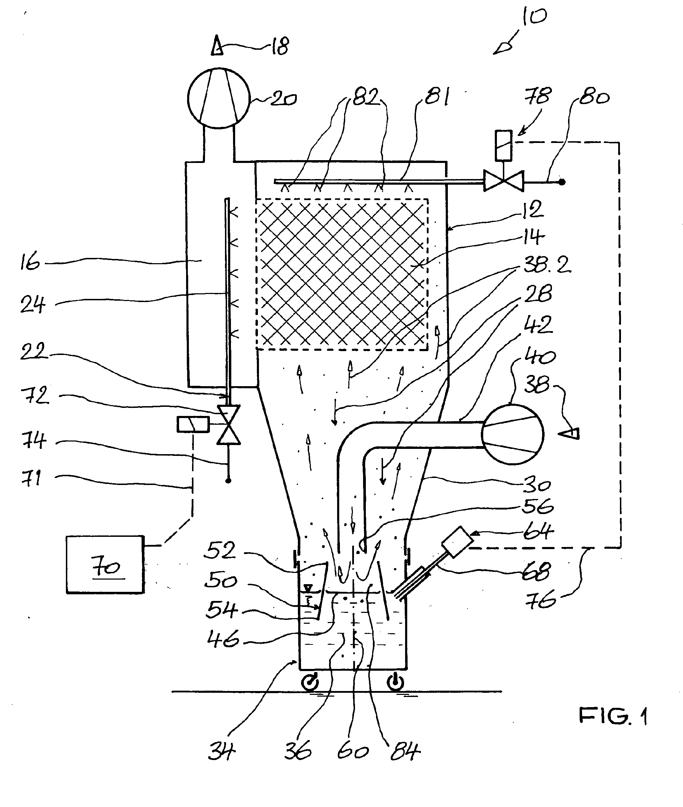

Die Erfindung wird im Folgenden anhand des in der Zeichnung dargestellten Ausführungsbeispiels näher beschrieben und erläutert. Die einzige Figur zeigt als
- Fig. 1: einen schematisierten Querschnitt durch eine Vorrichtung nach der Erfindung.

### WEGE ZUM AUSFÜHREN DER ERFINDUNG

Eine Abscheidevorrichtung 10 besitzt ein Filtergehäuse 12. Im oberen Bereich des Filtergehäuses 12 sind mehrere Filterelemente 14 vorhanden. Die Filterelemente 14 werden von außen nach innen durchströmt. Die Filterelemente 14 sind auf ihrer Reingasseite mit einer seitlich, rucksackähnlich an dem Filtergehäuse 12 angrenzenden Reingaskammer 16 verbunden. Aus dieser Reingaskammer 16 wird Reinluft 18 mittels eines motorisch angetriebenen Ventilators 20 aus dem Bereich des Filtergehäuses 12 herausgefördert.

In die Reingaskammer 16 mündet eine Filterabreinigungsvorrichtung 22 hinein, die an sich bekannt ist. Mittels dieser Abreinigungsvorrichtung 22 kann im Gegenstrom Luft stoßweise über eine Reinigungsleitung 24 in das Innere jedes der Filterelemente 14 hineingeleitet und damit die Filterelemente 14 von innen nach außen mit Luft beaufschlagt werden. Durch den dadurch bewirkten Rüttelvorgang werden die Filterelemente 14 von den außen an ihnen anliegenden Filterkuchen befreit. Diese Filterkuchen fallen als Prozess-Staub 28 in einen sich unten verjüngenden Teil 30 des Filtergehäuses 12 , von wo sie dann weiter in einen unterhalb des Filtergehäuses 12 befindlichen Auffangbehälter 34 hineinfallen. Dieser Auffangbehälter 34 ist mit Wasser 36 etwa zu drei viertel befüllt.

Das mit brennbarem Staub beladene Rohgas 38 wird mittels eines motorisch angetriebenen Ventilators 40 durch eine Rohgasleitung 42 von oben gegen den Wasserspiegel 46 des im Auffangbehälter 34 vorhandenen Wassers 36 geblasen. Die Rohgasleitung 42 führt von außen in den konischen Teil 30 des Filtergehäuses 12, ist im Zentrum des konischen Teils 30 nach unten um 90 Grad umgebogen und endet im unteren Mündungsbereich des konischen Teils 30.

In dem Auffangbehälter 34 ist ein konisches Rohrstück 50 platziert, das teilweise in das Wasser 36 eintaucht. Das Rohrstück 50 kann zylindrisch oder konisch nach unten oder oben sein, das heißt der Querschnitt 52 kann gleich, kleiner - wie im vorliegenden Beispielsfall - oder auch größer als der Rohrquerschnitt 54 sein. Im Mündungsbereich der Rohgasleitung 42 muss der Querschnitt 52 größer sein als der Querschnitt 56 der Rohgasleitung 42. Die Längsachse 60 im Bereich des Rohrquerschnittes 56 fällt zusammen mit der Rohrachse des Rohrstückes 50.

Der Wasserspiegel 46 und damit der Wasserstand des Wassers 36 innerhalb des Auffangbehälters 34 kann über eine Wasserstandsregulierung 64, enthaltend eine Sonde 68 und ein Magnetventil 78 mit Düsenlanze 81 konstant gehalten werden.

Eine Arbeitspausenregulierung 70 steuert über eine Steuerleitung 71 ein elektrisch geregeltes Magnetventil 72, das in einer Druckluftleitung 74 vorhanden ist und das die Menge und die zeitliche Abfolge der in die Reinigungsleitung 24 zwecks Abreinigung der Filterelemente 14 einströmenden Druckluft regelt.

Von der Sonde 68 führt eine Steuerleitung 76 zu einem elektrisch ansteuerbaren Ventil 78. Dieses Ventil 78 sitzt in einer weiteren Frischwasser-Zuleitung 80. Diese Zuleitung 80 besitzt eine Düsenlanze 81 mit mehreren Austrittsdüsen 82, die so in dem Filtergehäuse 12 angeordnet sind, dass durch sie hindurch die Filterelemente 14 mit Frischwasser aus der Zuleitung 80 heraus benetzbar sind. Das aus diesen Austrittsdüsen 82 austretende Wasser kann zur Bekämpfung eines eventuell im Inneren des Filtergehäuses 12 auftretenden Brandes verwendet werden. Dieses aus den Austrittsdüsen 82 austretende Wasser wird im Auffangbehälter 34 aufgefangen, so dass es auch zum Auffüllen des Auffangbehälters 34 mit Wasser 36 benutzt wird.

Das aus der Rohgasleitung 42 unten herausströmende Rohgas 38 trifft mit Druck gegen den Wasserspiegel 46. Dies hat zur Folge, dass im Bereich oberhalb des Wasserspiegels 46 eine starke Verwirbelung des Rohgases 38 mit dem Wasser 36 eintritt. Das Rohgas 38 beziehungsweise die in ihm enthaltenen Partikel werden dadurch stark mit Wasser angefeuchtet. Ausreichend schwerer Staub fällt nach unten in das Wasser 36 hinein. Die die demgegenüber leichteren Staubbestandteile enthaltende Rohgasströmung 38.2 strömt aus dem Innenraum 84, der unten begrenzt wird durch den Wasserspiegel 46 und seitlich begrenzt wird durch den aus dem Wasser 36 nach oben herausragenden Teil des Rohrstückes 50, nach oben heraus und von unten und seitlich von außen gegen die Filterelemente 14. Diese Gasströmung 38.2 wird mittels des Reinluft-Ventilators 20 durch die Filterelemente 14 und damit durch das Filtergehäuse 12 hindurchgesaugt.

## Patentansprüche

1. Vorrichtung (10) zum Abscheiden von Feststoffen aus einem gasförmigen Medium (38),
- mit in einem Filtergehäuse (12) vorhandenen Filterelementen (14),
- mit einer in die Vorrichtung (10) einmündenden Rohgasleitung (42) und einer aus dem Filtergehäuse (12) herausführenden Reingasleitung,
- mit einem dem Filtergehäuse strömungsmäßig nachgeschalteten Absaugventilator (20),
- mit einer Einrichtung zum Befeuchten der Filterelemente (14) und/oder des an den Filterelementen (14) anhaftenden Filterkuchens mit einer nicht brennbaren Flüssigkeit,
- mit einem unterhalb der Filterelemente (14) vorhandenen Auffangbehälter (34) für abgeschiedene Feststoffe,
- **dadurch gekennzeichnet, dass**
- der Auffangbehälter (34) zumindest teilweise mit Wasser (36) gefüllt ist,
- ein Ventilator (40) zum drückenden Einleiten des Mediums (38) durch die Rohgasleitung (42) hindurch und in die Abscheide-Vorrichtung (10) hinein vorhanden ist,
- die Rohgasleitung (42) oberhalb des Wasserspiegels (46) des im Auffangbehälter (34) vorhandenen Wassers (36) so endet, dass eine starke Verwirbelung des Wassers mit aus der Rohgasleitung herausströmendem Medium herstellbar ist.

2. Vorrichtung nach Anspruch 1,
- **dadurch gekennzeichnet, dass**
- der Vorratsbehälter (34) fest oder lösbar mit dem Filtergehäuse (12) verbunden ist.

3. Vorrichtung nach einem der vorstehenden Ansprüche,
- **dadurch gekennzeichnet, dass**
- eine Umlenkeinrichtung für im Vorratsbehälter (34) entstehendes Wasser-Medium-Gemisch vorhanden ist.

4. Vorrichtung nach Anspruch 3,
- **dadurch gekennzeichnet, dass**
- ein Rohrstück (50) den Wasserspiegel (46) durchstößt,
- die Längsachse (60) des Rohrstückes (50) senkrecht zur Mündungsfläche der Rohgasleitung (42) ausgerichtet ist,
- die Querschnitte (52) und (54) des Rohrstückes (50) gleich oder verschieden groß, das heißt zylindrisch oder kegelig nach unten oder oben sind,
- der Querschnitt (52) des Rohrstückes (50) an seinem zur Rohgasleitung (42) hin gerichteten Ende größer ist als der Mündungsdurchmesser der Rohgasleitung (42).

5. Vorrichtung nach Anspruch 4,
- **dadurch gekennzeichnet, dass**
- das Rohrstück (50) zumindest in seinem aus dem Wasser herausragenden Bereich sich nach oben verjüngend ausgebildet ist.

6. Vorrichtung nach einem der vorstehenden Ansprüche,
- **dadurch gekennzeichnet, dass**
- eine Frischwasserleitung (80) mit mehreren Austrittsdüsen (82) in das Filtergehäuse (12) so einmündet, dass
- die Filterelemente (14) mit Frischwasser benetzbar sind,
- das Frischwasser in dem Vorratsbehälter (34) auffangbar ist.

7. Vorrichtung nach einem der vorstehenden Ansprüche,
- **dadurch gekennzeichnet, dass**
- eine Wasserstandsregulierungs-Einrichtung (64) für das im Vorratsbehälter (34) vorhandene Wasser (36) vorhanden ist, mit der der Pegel des Wasserstandes festlegbar, insbesondere konstant hoch haltbar ist.

8. Vorrichtung nach Anspruch 7,
- **dadurch gekennzeichnet, dass**
- die Einrichtung (64) so ansteuerbar ist, dass sie als Brandlöscheinrichtung vorhanden ist.

9. Vorrichtung nach einem der vorstehenden Ansprüche,
- **dadurch gekennzeichnet, dass**
- ine Filterabreinigungsvorrichtung (22) für die Filterelemente (14) vorhanden ist.

10. Vorrichtung nach Anspruch 9,
- **dadurch gekennzeichnet, dass**
- die Filterabreinigungsvorrichtung (22) eine an eine Druckluftquelle anschließbare Druckluftleitung (24) enthält, durch die im Gegenstrom stoßweise Druckluft gegen die Filterelemente (14) leitbar ist.
